(19) Europäisches Patentamt
European Patent Office
Office européen des brevets

(11) **EP 3 901 570 B1**

(12) **EUROPÄISCHE PATENTSCHRIFT**

(45) Veröffentlichungstag und Bekanntmachung des Hinweises auf die Patenterteilung:
**19.04.2023 Patentblatt 2023/16**

(21) Anmeldenummer: **21169144.9**

(22) Anmeldetag: **05.07.2018**

(51) Internationale Patentklassifikation (IPC):
**G01B 11/22** (2006.01)   **G01B 9/02** (2022.01)
**B23K 26/03** (2006.01)

(52) Gemeinsame Patentklassifikation (CPC):
**G01B 11/22; B23K 26/032; B23K 26/08; B23K 26/21; B23K 26/36; B23K 26/382; B23K 31/125; G01B 9/02091**

(54) **VERFAHREN ZUR OPTISCHEN MESSUNG DER EINSCHWEISSTIEFE**

METHOD FOR OPTICAL MEASUREMENT OF WELD DEPTH

PROCÉDÉ DE MESURE OPTIQUE DE LA PROFONDEUR DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.08.2017 DE 102017117413**

(43) Veröffentlichungstag der Anmeldung:
**27.10.2021 Patentblatt 2021/43**

(62) Dokumentnummer(n) der früheren Anmeldung(en) nach Art. 76 EPÜ:
**18740759.8 / 3 469 302**

(73) Patentinhaber: **Precitec GmbH & Co. KG**
**76571 Gaggenau-Bad Rotenfels (DE)**

(72) Erfinder: **Strebel, Matthias**
**76571 Gaggenau (DE)**

(74) Vertreter: **Ter Meer Steinmeister & Partner Patentanwälte mbB**
**Nymphenburger Straße 4**
**80335 München (DE)**

(56) Entgegenhaltungen:
**EP-A1- 1 977 850        DE-A1-102014 007 887**
**US-A1- 2016 039 045**

• **KOGEL-HOLLACHER MARKUS ET AL: "Inline measurement for quality control from macro to micro laser applications", PROCEEDINGS OF SPIE; [PROCEEDINGS OF SPIE ISSN 0277-786X VOLUME 10524], SPIE, US, Bd. 10091, 20. Februar 2017 (2017-02-20), Seiten 100910H-100910H, XP060086447, DOI: 10.1117/12.2255824 ISBN: 978-1-5106-1533-5**

**Beschreibung**

Die Erfindung betrifft ein Verfahren zur optischen Messung der Einschweißtiefe, insbesondere beim Schweißen mittels Laserstrahlen.

Es ist bekannt zur optischen Messung der Einschweißtiefe optische Sensoren zur Abstandsmessung einzusetzen, die nach dem Prinzip der optische Kurzkohärenz Interferometrie arbeiten, bei dem Messlicht in einen Messlichtstrahl, im Folgenden auch kurz Messstrahl genannt, und einen Referenzlichtstrahl, im Folgenden auch kurz Referenzstrahl genannt, aufgespalten wird. Die aus einem Messarm und einem Referenzarm zurückreflektierten Mess- und Referenzlichtstrahlen werden einander überlagert, um aus den Wegunterschieden zwischen Mess- und Referenzarm die gewünschte Abstandsinformation zu ermitteln.

Der Einsatzbereich erstreckt sich dabei auf Bearbeitungsprozesse, die eine genaue und automatisierte Positionierung des Messlichtstrahls auf eine Position im Bereich der Wechselwirkungszone zwischen Arbeitslaserstrahl und Werkstück, insbesondere auf die vom Arbeitslaserstrahl in seinem Auftreffpunkt erzeugte Dampfkapillare, das sogenannte Keyhole erfordern, wie z.B. Laserschweißen mit in-line Überwachung der Einschweißtiefe zu deren Regelung.

Bekannte technische Lösungen zur genauen Positionierung eines optischen Messlichtstrahls beim Laserschweißen basieren auf kamerabasierten Verfahren zur Ermittlung der Messstrahlposition relativ zum Arbeitslaserstrahl. Diese Verfahren beruhen auf einer indirekten Ermittlung der Position des Messlichtstrahls auf der Werkstückoberfläche, die für die Einschweißtiefenmessung benötigt wird.

Die optimale Position des Messlichtstrahls relativ zum Bearbeitungsstrahl für eine zuverlässige Einschweißtiefenmessung ist jedoch von unterschiedlichen Prozessparametern - wie z.B. der Vorschubgeschwindigkeit und dem Material des Schweißguts - abhängig und kann daher mit den indirekten Verfahren zur Positionsermittlung nicht hinreichend genau bestimmt werden.

Die DE 101 55 203 A1 beschreibt eine Laserbearbeitungsvorrichtung mit einer Beobachtungsvorrichtung, die als Kurzkohärenzinterferometer zur Erfassung von Oberflächenmessdaten ausgebildet ist. Durch eine Messung an der Bearbeitungsstelle kann z.B. auch die Fokustiefe überwacht und geregelt werden. Wie die Messstelle, also der Auftreffpunkt des Messstrahls relativ zur Bearbeitungsstelle auszurichten ist, um eine verlässliche und genaue Messung der Fokus- oder Keyholetiefe zu erhalten, ist nicht beschrieben.

Die DE 10 2015 012 565 B3 betrifft eine Vorrichtung und Verfahren zur Erhöhung der Genauigkeit eines OCT-Messsystems für die Lasermaterialbearbeitung und beschreibt die Positionierung eines von einem optischen Kohärenztomographen erzeugten Messstrahls relativ zur Position des Laserstrahls bei der Bearbeitung mit Hilfe eines ortsauflösenden Sensors, wie einer Kamera. Dabei wird unter Berücksichtigung einer Messstrahlposition auf einem Werkstück ein Relativversatz zwischen dem Bearbeitungsstrahl und dem Messstrahl aus der vom Sensor bereitgestellten ortsaufgelösten Information bestimmt. Eine Positionierung des Messstrahls relativ zur Dampfkapillare, also zum Keyhole ist nicht beschrieben.

Die DE 10 2013 015 656 B4 betrifft ein Verfahren zur Messung der Einschweißtiefe, bei dem zwei Messstrahlen durch eine Bearbeitungsoptik geführt werden. Ein erster Messstrahl wird auf den Grund des Keyholes gerichtet, um den Abstand zum Keyholeboden zu messen, und ein zweiter Messstrahl wird auf die Oberfläche des Bauteils gerichtet, um den Abstand zur Bauteiloberfläche zu messen. Aus diesen beiden Abständen kann dann die Einschweißtiefe bestimmt werden. Wie die Ausrichtung des Messstrahls auf die Position des Keyholes erfolgt, ist nicht beschrieben.

Alle bekannten Verfahren beruhen wie oben beschrieben auf einer indirekten Ermittlung der Position des Messstrahls auf dem Werkstück für die Einschweißtiefenmessung. Auf diese Weise kann jedoch nicht die genaue Lage relativ zur Dampfkapillare, also zum Keyhole bestimmt werden, da es schwierig ist mit bildgebenden Verfahren die genaue Lage des Keyholes im Bearbeitungsbereich, also im Auftreffbereich des Arbeitslaserstrahls zu erfassen.

US 2016/0039045 A1 offenbart ein Verfahren zur Messung einer Tiefe eines Keyholes mittels Kurzkohärenz-Interferometrie.

Kogel-Hollacher et al., "Inline measurement for quality control from macro to micro laser applications", betrifft ebenfalls Keyhole-Tiefenmessung mittels Kurzkohärenz-Interferometrie.

DE 10 2014 0007 887 A1 offenbart eine Messvorrichtung zum Erfassen von Oberflächendaten wie einer Keyhole-Tiefe eines durch eine Laserbearbeitungsvorrichtung zu bearbeitenden Werkstücks unter Verwendung eines optischen Kohärenztomographen.

EP 1 977 850 A1 offenbart ein Verfahren zu Materialbearbeitung unter Verwendung eines hochenergetischen Bearbeitungsstrahls und eines optischen Kohärenztomographen zum Ermitteln einer Oberflächentopographie eines Werkstücks. Davon ausgehend liegt der Erfindung die Aufgabe zugrunde, ein Verfahren zur optischen Messung der Einschweißtiefe bereitzustellen, das eine genaue Positionierung des Messlichtstrahls auf die vorab ermittelte Position des Keyholes und damit eine zuverlässige Messung der Einschweißtiefe bei der anschließenden Laserbearbeitung ermöglicht.

Diese Aufgabe wird durch das Verfahren nach Patentanspruch 1 gelöst. Vorteilhafte Ausgestaltungen und Weiterbildungen der Erfindung sind in den Unteransprüchen beschrieben.

Erfindungsgemäß wird also zur Messung der Einschweißtiefe beim Schweißen mittels eines Arbeitslaserstrahls ein Messlichtstrahl eines Sensorsystems, insbesondere eines auf OCT Basis arbeitenden Sensorsystems in einen Bearbeitungsstrahlengang des Arbeitslaserstrahls in einem Laserbearbeitungskopf eingekoppelt. Der Messlichtstrahl wird von einer Fokussieroptik des Bearbeitungsstrahlengangs auf die Oberfläche eines Werkstücks gebündelt oder fokussiert, um dort einen Messlichtfleck zu bilden. Der an der Oberfläche des Werkstücks im Messlichtfleck reflektierte Messlichtstrahl wird zu einer Mess- und Auswerteeinheit des Sensorsystems zurückgeführt, um Information über den Abstand der Oberfläche des Werkstücks von einer beliebigen Referenzposition, insbesondere vom Laserbearbeitungskopf zu erhalten. Um ein Oberflächenprofil des Werkstücks im Bereich der Dampfkapillare zu erhalten, wird die Position des Messlichtflecks auf der Oberfläche des Werkstücks sowohl in Schweißrichtung als auch quer dazu über die Dampfkapillare geführt. Aus dem Oberflächenprofil des Werkstücks im Bereich der Dampfkapillare wird die Position der Dampfkapillare relativ zum Auftreffpunkt des Arbeitslaserstrahls ermittelt. Bei einem anschließend durchgeführten Laserbearbeitungsprozess wird dann der Messlichtfleck zur Messung der Einschweißtiefe in die ermittelte Position der Dampfkapillare bewegt, so dass der Messlichtstrahl präzise auf die Dampfkapillare, also das Keyhole ausgerichtet ist, wodurch eine zuverlässige und genaue Messung der Keyholetiefe und damit der Einschweißtiefe sichergestellt wird.

Bei einer vorteilhaften Ausgestaltung vorgesehen, dass als Position der Dampfkapillare relativ zum Auftreffpunkt des Arbeitslaserstrahls der tiefste Punkt der Dampfkapillare ermittelt wird. Hierdurch wird die Genauigkeit der Einschweißtiefenmessung weiter erhöht, da die Tiefe der Dampfkapillare, also des Keyholes im Wesentlichen der Tiefe des Schweißbads in der Wechselwirkungszone zwischen Arbeitslaserstrahl und Werkstück entspricht.

Zweckmäßiger Weise ist vorgesehen, dass der Messlichtfleck auf linearen Bahnen über die Dampfkapillare geführt wird, wobei das Oberflächenprofil aus den Messdaten entlang der linearen Bahnen durch Kurvenanpassung bestimmt wird. Hierdurch ergibt sich eine besonders einfache und schnelle Bestimmung

Insbesondere wird das Oberflächenprofil aus den Messdaten entlang der linearen Bahn quer zur Schweißrichtung durch eine Kurvenanpassung gemäß einer Gaußverteilung bestimmt während das Oberflächenprofil aus den Messdaten entlang der linearen Bahn in Schweißrichtung durch eine Kurvenanpassung gemäß einer Maxwell-Boltzmann-Verteilung bestimmt wird.

Eine alternative Ausführungsform der Erfindung zeichnet sich dadurch aus, dass der Messlichtfleck auf spiralförmigen Bahnen über die Dampfkapillare geführt wird, um anschließend aus den Abstandsmessdaten die optimale Messfleckposition zu ermitteln.

Grundsätzlich ist es auch möglich, die Einschweißtiefe entlang einer Schweißnaht während des Schweißprozesses aus den Oberflächenprofilen zu ermitteln. Die würde jedoch zu einer diskontinuierlichen Überwachung der Einschweißtiefe entlang einer Schweißnaht führen. Daher ist es erfindungsgemäß vorgesehen, dass die Position der Dampfkapillare relativ zum Auftreffpunkt des Arbeitslaserstrahls für vorgegebene Prozessparameter eines Bearbeitungsprozesses während einer Testbearbeitung ermittelt und als Messfleckposition für diesen Bearbeitungsprozess gespeichert wird. Auf diese Weise wird erreicht, dass bei Bearbeitungsprozessen, die durch die Prozessparameter klassifiziert sind, für die die Messfleckposition bestimmt wurde, die Einschweißtiefe quasi-kontinuierlich überwacht und gegebenenfalls nachgeregelt werden kann. Somit ermöglicht die vorliegende Erfindung durch die Nachregelung der Einschweißtiefe nicht nur qualitativ hochwertige Laserbearbeitungen, insbesondere Schweißungen, sondern auch eine zuverlässige Dokumentation der Einschweißtiefe über die gesamte Schweißnaht zur Qualitätskontrolle und -sicherung.

Eine vorteilhafte Weiterbildung der Erfindung zeichnet sich dadurch aus, dass die jeweilige Position der Dampfkapillare relativ zum Auftreffpunkt des Arbeitslaserstrahls für vorgegebene Prozessparameter verschiedener Bearbeitungsprozesse während Testbearbeitungen ermittelt und als Messfleckpositionen für diese Bearbeitungsprozesse gespeichert werden. Erfindungsgemäß erfolgt also die Vermessung der idealen Messstrahlposition für verschiedene Prozesse und mit anschließender Speicherung der Positionen z.B. direkt in dem Sensorsystem. Damit können nun an einer Anlage Schweißungen mit unterschiedlichen Prozessparametern nacheinander durchgeführt werden, wobei jeweils die zuvor ermittelten Positionen durch eine entsprechende Aktorik angefahren werden.

Bei einer vorteilhaften Weiterbildung der Erfindung ist vorgesehen, dass für einen Bearbeitungsprozess, bei dem sich die Vorschubrichtung entlang des Bearbeitungsverlaufs ändert, die für die entsprechenden Prozessparameter gespeicherte Messfleckposition an die jeweilige Vorschubrichtung angepasst wird. Bei einem Schweißprozess, bei dem sich die Vorschubrichtung entlang des Schweißnahtverlaufs ändert, kann also eine entsprechende Aktorik die zuvor ermittelten und gespeicherten idealen Positionen für den Messlichtstrahl zur Einschweißtiefenmessung an die Vorschubrichtung anpassen.

Zweckmäßiger Weise wird das erfindungsgemäße Verfahren mit einer Vorrichtung nach Anspruch 8 zur Messung der Einschweißtiefe beim Schweißen mittels eines Arbeitslaserstrahls ausgeführt, die Folgendes aufweist: einen Laserbearbeitungskopf, durch den ein Bearbeitungsstrahlengang mit einer Fokussieroptik zur Fokussierung des Arbeitslaserstrahls auf ein Werkstück geführt ist, ein Sensorsystem zur Erzeugung eines Messlichtstrahl, der in den Bearbeitungsstrahlengang im Laserbearbeitungskopf einkoppelbar ist und der von der Fokussieroptik des Bearbeitungsstrahlengangs in einen Messlichtfleck auf einer Oberfläche des Werkstücks gebündelt oder fokussiert werden kann, und eine Aktorik, die eine Ablenkeinheit für den Messlichtstrahl aufweist. Das Sensorsystems und die Aktorik sind dabei so konfiguriert, dass sie ein erfindungsgemäßes Verfahren zur Messung der Einschweißtiefe ausführen können.

Die Erfindung wird im Folgenden beispielsweise anhand der Zeichnung näher erläutert. Es zeigen:

Figur 1 eine vereinfachte schematische Darstellung einer Vorrichtung zur Messung der Einschweißtiefe gemäß der vorliegenden Erfindung;

Figur 2 eine vereinfachte schematische Darstellung eines Laserbearbeitungskopfes mit einem optischen System zum Einkoppeln eines Messlichtstrahls von einem Sensorsystem zur Einschweißtiefenmessung;

Figur 3 eine schematische Schnittansicht eines Werkstücks zur Darstellung einer Dampfkapillare (*keyhole*) beim Schweißen;

Figur 4 eine schematische Draufsicht auf die Oberfläche eines Werkstücks im Bereich einer Wechselwirkungszone zwischen Arbeitslaserstrahl und Werkstück zur Darstellung linearer Abtastlinien zur Erfassung eines Oberflächenprofils;

Figur 5a Abstandsmessdaten einer Schweißfahrt auf einer linearen Bahn quer zur Schweißrichtung;

Figur 5b Abstandsmessdaten einer Schweißfahrt auf einer linearen Bahn in Schweißrichtung; und

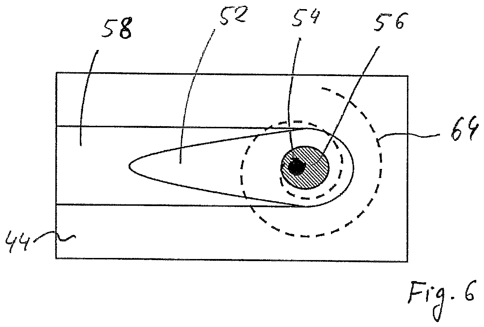

Figur 6 eine schematische Draufsicht auf die Oberfläche eines Werkstücks im Bereich einer Wechselwirkungszone zwischen Arbeitslaserstrahl und Werkstück zur Darstellung spiralförmiger Abtastlinien zur Erfassung eines Oberflächenprofils.

In den verschiedenen Figuren der Zeichnung sind einander entsprechende Bauteile und Elemente mit gleichen Bezugszeichen versehen.

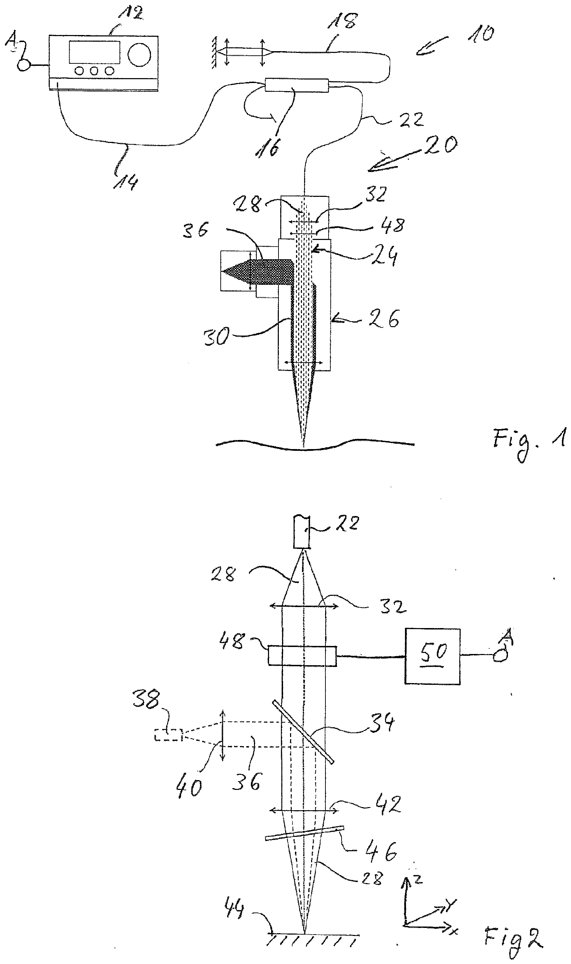

Wie in Figur 1 dargestellt, umfasst die Vorrichtung zur Messung der Einschweißtiefe ein Sensorsystem 10, das nach dem Prinzip der optischen Kohärenztomographie arbeitet, die sich unter Zuhilfenahme eines Interferometers die Kohärenzeigenschaften von Licht zunutze macht. Das Sensorsystem 10 umfasst eine Mess- und Auswerteeinheit 12, die eine breitbandige Lichtquelle (Superlumineszensdiode, SLD; SweptSource Lichtquellen (spektral durchstimmbare Lichtquellen) oder dergleichen) aufweist, deren Messlicht in einen Lichtwellenleiter 14 eingekoppelt wird. In einem Strahlteiler 16, der vorzugsweise einen Faserkoppler aufweist, wird das Messlicht in einem Referenzarm 18 und einen Messarm 20 aufgespalten, der einen Lichtwellenleiter 22 und einen Messlichtstrahlengang 24 umfasst, der durch einen Laserbearbeitungskopf 26 läuft. Der Messlichtstrahlengang 24 umfasst ein optisches System zum Einkoppeln eines Messlichtstrahls 28 in einen Bearbeitungsstrahlengang 30 im Laserbearbeitungskopf 26. Das optische System zum Einkoppeln des Messlichtstrahls 28 in den Bearbeitungsstrahlengang 30 umfasst, wie insbesondere in Figur 2 zu erkennen ist, eine Kollimatoroptik 32, die den aus dem Lichtwellenleiter 22 austretenden Messlichtstrahl 28 kollimiert, damit er im Laserbearbeitungskopf 26 über einen teildurchlässigen Spiegel 34 in den Bearbeitungsstrahlengang 30 eingekoppelt und einem Arbeitslaserstrahl 36 überlagert werden kann. Der Arbeitslaserstrahl 36, der beispielsweise über einen entsprechenden Lichtwellenleiter 38 dem Laserbearbeitungskopf 26 zugeführt wird, wird von einer Kollimatoroptik 40 kollimiert und über den teildurchlässigen Spiegel 34 zur Fokussieroptik 42 gelenkt, die den Arbeitslaserstrahl 36 zusammen mit dem Messlichtstrahl 28 auf die Oberfläche eines Werkstücks 44 bündelt oder fokussiert. Zum Schutz der Fokussieroptik 42 vor Spritzern und dergleichen aus der Wechselwirkungszone zwischen Arbeitslaserstrahl 36 und Werkstück 44 ist ein Schutzglas 46 zwischen Fokussieroptik 42 und Werkstück 44 angeordnet.

Um den Messlichtstrahl 28 und damit den vom Messlichtstrahl 28 auf der Oberfläche des Werkstücks 44 erzeugten Messlichtfleck sowohl in Schweißrichtung als auch quer dazu über die Oberfläche des Werkstücks führen zu können, ist eine Aktorik mit Ablenkeinheit 48 vorgesehen, die den Messlichtstrahl 28 in zwei sich schneidenden Richtungen, z. B. in x- und y-Richtung über die Oberfläche des Werkstücks bewegen kann, um eine Oberflächenkontur des Werkstücks 44 abzutasten und ein entsprechendes Oberflächenprofil zu erfassen. Die Ablenkeinheit 48 kann als Galvano-Scanner mit zwei zueinander im Wesentlichen senkrechten Abtastrichtungen mit reflektiven Optiken oder mit transmissiven Optiken, z.B. Prismen ausgebildet sein. Eine weitere mögliche Ausbildung der Ablenkeinheit 48 ist eine Vorrichtung mit einer in zwei Richtungen verschiebbaren Optik. Die Ablenkeinheit 48 wird von einer Steuereinheit 50 so gesteuert, dass sie den Messlichtstrahl 28 zur Erfassung eines Oberflächenprofils während einer Test- oder Messschweißfahrt über die Oberfläche des Werkstücks 44 bewegt oder während eines Fertigungsschweißprozesses den Messlichtstrahl 38 und damit den Messlichtfleck auf die für die Prozessparameter eines Schweißprozesses ermittelte Keyhole-Position lenkt. Die Steuereinheit 50 kann als selbstständige Einheit vorgesehen sein, die mit dem Sensorsystem 10, insbesondere mit dessen Mess- und Auswerteeinheit 12 verbunden ist, wie schematisch durch die Ein- und Ausgänge A von Mess- und Auswerteeinheit 12 und Steuereinheit 50 angedeutet ist, oder in das Sensorsystem 10 integriert sein.

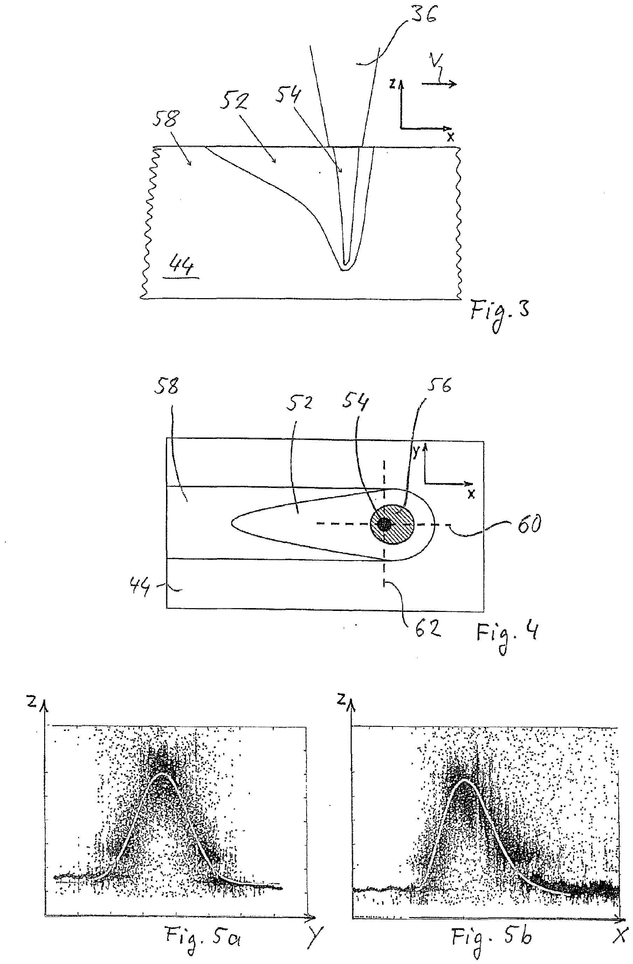

Wie in Figur 3 und 4 dargestellt ist, weißt die Wechselwirkungszone zwischen Arbeitslaserstrahl 36 und Werkstück 44 einen Bereich von flüssiger Schmelze 52, also ein Schweißbad auf, das eine Dampfkapillare 54 umgibt, die sich im Auftreffbereich 56 des Arbeitslaserstrahls 36 auf dem Werkstück 44 befindet. Wie in Figur 3 zu erkennen ist, entspricht die Tiefe der Dampfkapillare 54 bis auf einen Korrekturfaktor im Wesentlichen der Tiefe des Schweißbads. In Vorschubrichtung (Vorschubrichtung V in Figur 3; x-Richtung in Figur 4) hinter der Wechselwirkungszone zwischen Laserstrahl 36 und Werkstück 44 befindet sich dann die erstarrte Schmelze 58 der fertigen Schweißnaht.

Um für einen bestimmten Laserbearbeitungsprozess, der durch seine Prozessparameter, wie Vorschubgeschwindigkeit, Laserleistung, Fokuslage des Arbeitslaserstrahls 36 in z-Richtung, also in Richtung senkrecht zur Werkstückoberfläche, Material des Schweißguts, also des Werkstücks 44 und/oder die Nahtgeometrie klassifiziert werden kann, die relative Lage der Dampfkapillare 54 zum Auftreffbereich 56 des Arbeitslaserstrahls 36 zu ermitteln, wird während einer Test- oder Messschweißfahrt mit Hilfe der Ablenkeinheit 48 die Position des Messlichtstrahls 28, also des dadurch erzeugten Messlichtflecks auf dem Werkstück 44 während des Schweißprozesses auf einer linearen Bahn 60, 62 sowohl in Schweißrichtung als auch senkrecht dazu über die Dampfkapillare 54, also über das Keyhole bewegt.

Dabei werden Abstandsdaten entlang der Abtastbahnen mit Hilfe des Sensorsystems 10 aufgenommen. Dazu wird der Messlichtstrahl 28, der in den Bearbeitungsstrahlengang 30 eingekoppelt ist, von der Fokussieroptik 42 in einen Messlichtfleck auf die Oberfläche eines Werksrücks 44 gebündelt oder fokussiert und von der Ablenkeinheit 48 entsprechend den gewählten Abtastbahnen über die Oberfläche des Werkstücks 44 geführt. Der an der Oberfläche des Werkstücks 44 reflektierte Messlichtstrahl 28 wird im Strahlteiler 16, der einen Faserkoppler umfasst, mit dem Referenzlichtstrahl aus dem Referenzarm 18 überlagert und an die Mess- und Auswerteeinheit 20 zurückgeführt, die aus der Information über die Wegunterschiede im Referenzarm 18 und Messarm 20 Information über den Abstand der Oberfläche des Werkstücks 44 von einer beliebigen Referenzposition über dem Werkstück 44, also beispielsweise von der Position des Laserbearbeitungskopfes 26 oder der Position der Fokussieroptik 42 darin ermittelt. Um die optimale Positionierung des Messlichtflecks bei der Messung der Einschweißtiefe zu ermitteln, wird aus den in Figur 5a und 5b als Punktwolken entlang der jeweiligen Bahnen dargestellten Abstandsdatenverteilungen der Verlauf der Oberflächenkontur des Werkstücks 44 im Bereich der Wechselwirkungszone zwischen Arbeitslaserstrahl 36 und Werkstück 44 entlang der Bahnen 60, 62 durch entsprechende Kurvenanpassung ermittelt.

Das Oberflächenprofil des Werkstücks 44 entlang der Bahn 62, das in Bereich der Dampfkapillare 54, deren Tiefenprofil senkrecht zur Vorschubrichtung V darstellt, ist dabei symmetrisch. Für die Ermittlung der Lage des tiefsten Punktes der Dampfkapillare 54, die die ideale Position für den Messlichtfleck, also für den Auftreffpunkt des Messlichtstrahls 28 auf dem Werkstück 44 darstellt, wird durch die Abstandsdaten eine symmetrische Kurve zur Kurvenanpassung gelegt. Zweckmäßigerweise lässt sich die Kurvenanpassung dabei mittels einer Gauß-Verteilung durchführen.

$$f(y) = \frac{1}{\sigma\sqrt{2\pi}} e^{-\frac{1}{2}((y-\mu)/\sigma)^2}$$

Dabei ist y die Position des Messlichtflecks auf dem Werkstück in y-Richtung, also senkrecht zur Vorschubrichtung V (siehe Figur 3), wobei $\mu$ den Erwartungswert und $\sigma^2$ die Varianz der Verteilung angeben.

Das Tiefenprofil der Dampfkapillare 54 in Vorschubrichtung ist, wie in Figur 5b zu erkennen ist, asymmetrisch und entspricht in etwa dem Verlauf einer Maxwell-Boltzmann- Verteilung.

$$f(x) = k1 * x^2 * e^{-k2*x^2}$$

Wobei x die Position des Messstrahls 28 auf der Werkstückoberfläche in Vorschubrichtung widergibt und k1 und k2 Parameter der Verteilung sind. Aus den Parametern lässt sich das Maximum der Verteilung bestimmen.

Somit ist die Lage des tiefsten Punktes der Dampfkapillare 54 relativ zum Auftreffbereich 56 des Arbeitslaserstrahls 36 bekannt, so dass die nachfolgende Bearbeitung von Werkstiicken 44 mit einem Laserbearbeitungsprozess, der mit denselben Prozessparametern durchgeführt wird wie die Messschweißfahrt, der Messlichtstrahl 28 genau in das Keyhole, also in die Dampfkapillare 54 gerichtet werden kann, um eine zuverlässige und genaue Messung der Einschweißtiefe zu ermöglichen.

Zweckmäßigerweise wird die Lage des Keyholes 54 relativ zum Auftreffbereich 56 des Arbeitslaserstrahls 36 zusammen mit den dazu gehörigen Prozessparametern gespeichert. Dieser Vorgang, also die Ermittlung der Position der Dampfkapillare 54 wird immer dann durchgeführt, wenn mit dem Laserbearbeitungskopf 26 ein Schweißprozess mit Prozessparametern durchgeführt werden soll, für die noch keine optimale Positionierung des Messlichtflecks relativ zur Dampfkapillare 54 ermittelt wurde. Dabei wird jedes Mal die Lage des Keyholes zusammen mit den Prozessparametern gespeichert, so dass im Laufe der Zeit die Positionen des Keyholes für eine Vielzahl von verschiedenen Laserbearbeitungsprozessen bekannt sind, so dass bei der Umstellung von einem Laserbearbeitungsprozess auf einen anderen eine erneute Testschweißung dann erforderlich ist, wenn dieser Laserbearbeitungsprozess von dem Laserbearbeitungskopf noch nie durchgeführt wurde.

Je nach der in der Ablenkeinheit 48 verwendeten Scanner-Optik kann es nötig sein, dass die Ermittlung der Position der Dampfkapillare wiederholt durchgeführt werden muss, auch wenn dies mit den gegebenen Schweißparametern schon durchgeführt und gespeichert wurde. Insbesondere äußere Störeinflüsse wie z.B. Temperaturänderungen können zu einer Drift, also zu einer Veränderung der Abtastposition der Ablenkeinheit 48, also der Messlichtfleckposition führen, sodass der Messlichtstrahl 28 nicht mehr in die Dampfkapillare 54 trifft. Aufgrund dieser Drift kann es erforderlich sein, die Lage der Dampfkapillare 54 in bestimmten Zeitabständen, z.B. einmal am Tag oder einmal in der Woche wiederholt zu ermitteln.

Die Speicherung der Positionen der Dampfkapillare für die verschiedenen Laserbearbeitungsprozesse erfolgt vorteilhafterweise in einem in der Steuereinheit 50 integrierten Speicher oder in einem Speicher im Sensorsystem 10. Die Steuereinheit 50 kann auch integraler Bestandteil des Sensorsystems 10 sein; somit können an einer Anlage Schweißungen mit unterschiedlichen Prozessparametern nacheinander durchgeführt werden, wobei jeweils der Messlichtfleck, also der Messlichtstrahl 28 auf die zuvor ermittelten Positionen der Dampfkapillare 54 durch die Ablenkeinheit 48 eingestellt wird.

Ändert sich bei einem Schweißprozess die Vorschubrichtung entlang des Schweißnahtverlaufs, weicht also die Vorschubrichtung von der ursprünglichen, als x-Richtung angenommenen Vorschubrichtung ab, so werden die zuvor ermittelten und gespeicherten idealen Positionen für den Messlichtfleck an die geänderte Vorschubrichtung angepasst.

Anstelle der Ermittlung der Position der Dampfkapillare 54, also der Position des tiefsten Punktes der Dampfkapillare 54 mithilfe von Abstandsdaten, die entlang von zwei sich schneidenden linearen Bahnen 60 und 62 erhalten wurden, ist es auch möglich, den Messlichtfleck auf einer spiralförmigen Bahn 64 in der Wechselwirkungszone zwischen Arbeitslaserstrahl 36 und dem Werkstück 44 zu führen, um die Lage der Dampfkapillare 54 relativ zum Auftreffbereich 56 des Arbeitslaserstrahls 36 zu ermitteln. Hierbei kann entlang einer relativ weiten spiralförmigen Bahn 64 zunächst die ungefähre Position der Dampfkapillare 54 aus einem dreidimensionalen trichterförmigen Oberflächen- bzw. Tiefenprofil ermittelt werden, um dann in einem zweiten Messschritt das Oberflächen- oder Tiefenprofil mittels einer engen spiralförmigen Bahn im Bereich des Auftreffbereichs 56 des Arbeitslaserstrahls 36 zu bestimmen, aus dem dann die genaue Position der Dampfkapillare 54 bestimmt werden kann.

Ferner ist es auch denkbar, die Oberfläche des Werkstücks 44 in der Wechselwirkungszone zwischen Arbeitslaserstrahl 36 und Werkstück 44 zeilenförmig zu erfassen, wobei die Zeilen oder Bahnen jeweils senkrecht zu ihrer Längserstreckung über das Werkstück verschoben werden, um aus dem so erfassten Oberflächen- oder Tiefenprofile die genaue Lage des Keyholes zu ermitteln.

**Patentansprüche**

1. Verfahren zur Messung der Einschweißtiefe beim Schweißen mittels eines Arbeitslaserstrahls (36), bei dem

   - ein Messlichtstrahl (28) eines Sensorsystems (10) in einen Bearbeitungsstrahlengang (30) des Arbeitslaserstrahls (36) in einem Laserbearbeitungskopf (26) eingekoppelt und von einer Fokussieroptik (42) des Bearbeitungsstrahlengangs (30) in einen Messlichtfleck auf einer Oberfläche eines Werkstücks (44) gebündelt oder fokussiert wird,
   - der an der Oberfläche des Werkstücks (44) reflektierte Messlichtstrahl (28) zu einer Mess- und Auswerteeinheit (12) des Sensorsystems (10) zurückgeführt wird, um Information über den Abstand der Oberfläche des Werkstücks (44) vom Laserbearbeitungskopf (26) zu erhalten,
   - die Position des Messlichtflecks auf der Oberfläche des Werkstücks (44) sowohl in Schweißrichtung als auch quer dazu über die Dampfkapillare (54) geführt wird, um ein Oberflächenprofil des Werkstücks im Bereich der Dampfkapillare (54) zu erhalten,
   - die Position der Dampfkapillare (54) relativ zum Auftreffpunkt des Arbeitslaserstrahls aus dem Oberflächenprofil des Werkstücks im Bereich der Dampfkapillare (54) ermittelt wird, und
   - der Messlichtfleck zur Messung der Einschweißtiefe bei der Laserbearbeitung in die ermittelte Position der Dampfkapillare (54) bewegt wird;
   wobei der Messlichtfleck auf linearen Bahnen (60, 62) über die Dampfkapillare (54) geführt wird und das Oberflächenprofil aus den Messdaten entlang der linearen Bahnen (60, 62) durch Kurvenanpassung bestimmt wird, oder wobei der Messlichtfleck auf spiralförmigen Bahnen (64) über die Dampfkapillare (54) geführt wird.

2. Verfahren nach Anspruch 1, **dadurch gekennzeichnet, dass** als Position der Dampfkapillare (54) relativ zum Auftreffpunkt (45) des Arbeitslaserstrahls (36) der tiefste Punkt der Dampfkapillare (54) ermittelt wird.

3. Verfahren nach Anspruch 1, wobei wenn der Messlichtfleck auf linearen Bahnen (60, 62) über die Dampfkapillare (54) geführt wird, das Oberflächenprofil aus den Messdaten entlang der linearen Bahn (62) quer zur Schweißrichtung durch eine Kurvenanpassung gemäß einer Gaußverteilung bestimmt wird.

**4.** Verfahren nach Anspruch 1 oder 3, wobei wenn der Messlichtfleck auf linearen Bahnen (60, 62) über die Dampfkapillare (54) geführt wird, das Oberflächenprofil aus den Messdaten entlang der linearen Bahn (60) in Schweißrichtung durch eine Kurvenanpassung gemäß einer Maxwell-Boltzmann-Verteilung bestimmt wird.

**5.** Verfahren nach einem der vorstehenden Ansprüche, wobei die Position der Dampfkapillare (54) relativ zum Auftreffpunkt (56) des Arbeitslaserstrahls (36) für vorgegebene Prozessparameter eines Bearbeitungsprozesses während einer Testbearbeitung ermittelt und als Messfleckposition für diesen Bearbeitungsprozess gespeichert wird.

**6.** Verfahren nach Anspruch 5, wobei die jeweilige Position der Dampfkapillare (54) relativ zum Auftreffpunkt (56) des Arbeitslaserstrahls (36) für vorgegebene Prozessparameter verschiedener Bearbeitungsprozesse während Testbearbeitungen ermittelt und als Messfleckpositionen für diese Bearbeitungsprozesse gespeichert werden.

**7.** Verfahren nach Anspruch 5 oder 6, wobei für einen Bearbeitungsprozess, bei dem sich die Vorschubrichtung entlang des Bearbeitungsverlaufs ändert, die für die entsprechenden Prozessparameter gespeicherte Messfleckposition an die jeweilige Vorschubrichtung angepasst wird.

**8.** Vorrichtung zur Messung der Einschweißtiefe beim Schweißen mittels eines Arbeitslaserstrahls (36), mit

- einem Laserbearbeitungskopf (26) enthaltend eine Fokussieroptik (42), wobei ein Bearbeitungsstrahlengang (30) mit der Fokussieroptik (42) zur Fokussierung des Arbeitslaserstrahls (36) auf ein Werkstück (44) geführt ist,
- einem Sensorsystem (10) zur Erzeugung eines Messlichtstrahl (28), der mittels eines optischen Systems in den Bearbeitungsstrahlengang (30) im Laserbearbeitungskopf (26) eingekoppelt ist und der von der Fokussieroptik (42) des Bearbeitungsstrahlengangs (30) in einen Messlichtfleck auf einer Oberfläche des Werkstücks (44) gebündelt oder fokussiert werden kann, und
- einer Aktorik, die eine Ablenkeinheit (48) für den Messlichtstrahl (28) aufweist,
- wobei das Sensorsystems (10) und die Aktorik konfiguriert sind ein Verfahren zur Messung der Einschweißtiefe gemäß einem der vorstehenden Ansprüche auszuführen.

**Claims**

**1.** A method for measuring the weld penetration depth in welding carried out by means of a working laser beam (36), wherein

- a measurement light beam (28) of a sensor system (10) is coupled into a processing beam path (30) of the working laser beam (36) in a laser machining head (26) and bundled or focused into a measurement light spot on a surface of a workpiece (44) by means of focusing optics (42) of the processing beam path (30),
- the measurement light beam (28) reflected on the surface of the workpiece (44) is returned to a measurement and evaluation unit (12) of the sensor system (10) in order to obtain information on the distance of the surface of the workpiece (44) from the laser machining head (26),
- the position of the measurement light spot on the surface of the workpiece (44) is guided over the vapor capillary (54) both in the welding direction as well as transverse to the welding direction in order to obtain a surface profile of the workpiece in the region of the vapor capillary (54),
- the position of the vapor capillary (54) relative to the point of incidence of the working laser beam is determined from the surface profile of the workpiece in the region of the vapor capillary (54), and
- the measurement light spot is moved into the determined position of the vapor capillary (54) in order to measure the weld penetration depth during the laser machining process;
wherein the measurement light spot is guided over the vapor capillary (54) on linear paths (60, 62), and the surface profile is determined from the measurement data along the linear paths (60, 62) by means of curve fitting, or
wherein the measurement light spot is guided over the vapor capillary (54) on spiral-shaped paths (64).

**2.** The method according to claim 1, **characterized in that** the lowest point of the vapor capillary (54) is determined as the position of the vapor capillary (54) relative to the point of incidence (45) of the working laser beam (36).

**3.** The method according to claim 1, wherein, when the measurement light spot is guided over the vapor capillary (54) on linear paths (60, 62), the surface profile is determined from the measurement data along the linear path (62) transverse to the welding direction by means of curve fitting according to a Gaussian distribution.

**4.** The method according to claim 1 or 3, wherein, when the measurement light spot is guided over the vapor capillary (54) on linear paths (60, 62), the surface profile is determined from the measurement data along the linear paths (60) in the welding direction by means of curve fitting according to a Maxwell-Boltzmann distribution.

**5.** The method according to one of the preceding claims, wherein the position of the vapor capillary (54) relative to the point of incidence (56) of the working laser beam (36) is determined for predefined process parameters of a machining process during a test machining run and stored as the measurement spot position for this machining process.

**6.** The method according to claim 5, wherein the respective positions of the vapor capillary (54) relative to the point of incidence (56) of the working laser beam (36) are determined for predefined process parameters of different machining processes during test machining runs and stored as measurement spot positions for these machining processes.

**7.** The method according to claim 5 or 6, wherein, for a machining process in which the advance direction changes during the course of the machining process, the measurement spot position stored for the corresponding process parameters is adapted to the respective advance direction.

**8.** A device for measuring the weld penetration depth in welding carried out by means of a working laser beam (36), comprising

- a laser machining head (26) comprising focusing optics (42), wherein a processing beam path (30) with the focusing optics (42) for focusing the working laser beam (36) on a workpiece (44) extends,
- a sensor system (10) for generating a measurement light beam (28) which is coupled, by means of an optical system, into the processing beam path (30) in the laser machining head (26) and which can be bundled or focused in a measurement light spot on a surface of the workpiece (44) by means of the focusing optics (42) of the processing beam path (30), and
- an actuator system which comprises a deflection unit (48) for the measurement light beam (28),
- wherein the sensor system (10) and the actuator system are configured to carry out a method for measuring the weld penetration depth according to one of the preceding claims.

**Revendications**

**1.** Procédé pour mesurer la profondeur de pénétration d'une soudure lors d'un soudage réalisé au moyen d'un faisceau laser de travail (36), dans lequel

- un faisceau lumineux de mesure (28) d'un système de capteurs (10) est couplé dans un trajet de faisceau d'usinage (30) du faisceau laser de travail (36) dans une tête d'usinage laser (26) et est groupé ou focalisé en un spot lumineux de mesure sur une surface d'une pièce (44), par une optique de focalisation (42) du trajet de faisceau d'usinage (30),
- le faisceau lumineux de mesure (28) réfléchi sur la surface de la pièce (44) est renvoyé vers une unité de mesure et d'évaluation (12) du système de capteurs (10), afin d'obtenir une information concernant la distance entre la surface de la pièce (44) et la tête d'usinage laser (26),
- la position du spot lumineux de mesure sur la surface de la pièce (44) est guidée au-dessus du capillaire de vapeur (54) aussi bien dans une direction de soudage que transversalement à celle-ci, afin d'obtenir un profil de surface de la pièce dans la zone du capillaire de vapeur (54),
- la position du capillaire de vapeur (54) par rapport au point d'incidence du faisceau laser de travail est déterminée à partir du profil de surface de la pièce dans la zone du capillaire de vapeur (54), et
- le spot lumineux de mesure est déplacé pour mesurer la profondeur de pénétration de soudure lors de l'usinage au laser dans la position déterminée du capillaire de vapeur (54) ;

dans lequel le spot lumineux de mesure est guidé au-dessus du capillaire de vapeur (54) sur des trajets linéaires (60, 62) et le profil de surface est déterminé à partir des données de mesure le long des trajets linéaires (60, 62) par ajustement de courbe, ou

dans lequel le spot lumineux de mesure est guidé au-dessus du capillaire de vapeur (54) sur des trajets en forme de spirale (64).

**2.** Procédé selon la revendication 1, **caractérisé en ce que** le point le plus profond du capillaire de vapeur (54) est déterminé comme position du capillaire de vapeur (54) par rapport au point d'incidence (45) du faisceau laser de travail (36).

**3.** Procédé selon la revendication 1, dans lequel lorsque le spot lumineux de mesure est guidé au-dessus du capillaire de vapeur (54) sur des trajets linéaires (60, 62), le profil de surface est déterminé à partir des données de mesure le long du trajet linéaire (62) transversalement à la direction de soudage, par un ajustement de courbe selon une distribution gaussienne.

**4.** Procédé selon la revendication 1 ou 3, dans lequel lorsque le spot lumineux de mesure est guidé au-dessus du capillaire de vapeur (54) sur des trajets linéaires (60, 62), le profil de surface est déterminé à partir des données de mesure le long du trajet linéaire (60) dans la direction de soudage, par un ajustement de courbe selon une distribution de Maxwell-Boltzmann.

5. Procédé selon l'une des revendications précédentes, dans lequel la position du capillaire de vapeur (54) par rapport au point d'incidence (56) du faisceau laser de travail (36) est déterminée pour des paramètres de processus prédéfinis d'un processus d'usinage pendant un usinage de test et est enregistrée en tant que position de spot de mesure pour ce processus d'usinage.

6. Procédé selon la revendication 5, dans lequel les positions respectives du capillaire de vapeur (54) par rapport au point d'incidence (56) du faisceau laser de travail (36) sont déterminées pour des paramètres de processus prédéfinis de différents processus d'usinage pendant des usinages de test et sont enregistrées en tant que positions de spot de mesure pour ces processus d'usinage.

7. Procédé selon la revendication 5 ou 6, dans lequel pour un processus d'usinage dans lequel la direction d'avance varie au cours de l'usinage, la position de spot de mesure enregistrée pour les paramètres de processus correspondants est adaptée à la direction d'avance respective.

8. Dispositif pour mesurer la profondeur de pénétration de soudure lors d'un soudage au moyen d'un faisceau laser de travail (36), comportant :

   - une tête d'usinage laser (26) contenant une optique de focalisation (42), dans laquelle un trajet de faisceau d'usinage (30) est guidé avec l'optique de focalisation (42) sur une pièce (44) pour la focalisation du faisceau laser de travail (36),
   - un système de capteurs (10) pour générer un faisceau lumineux de mesure (28) qui est couplé dans la tête d'usinage laser (26) au moyen d'un système optique dans le trajet de faisceau d'usinage (30) et qui peut être regroupé ou focalisé par l'optique de focalisation (42) du trajet de faisceau d'usinage (30) pour former un spot lumineux de mesure sur une surface de la pièce (44), et
   - un actionneur comportant une unité de déviation (48) pour le faisceau lumineux de mesure (28),
   - dans lequel le système de capteurs (10) et l'actionneur sont configurés pour mettre en oeuvre un procédé pour mesurer la profondeur de pénétration d'une soudure selon l'une des revendications précédentes.

Fig. 1

Fig2

Fig. 3

Fig. 4

Fig. 5a

Fig. 5b

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10155203 A1
- DE 102015012565 B3
- DE 102013015656 B4
- US 20160039045 A1
- DE 1020140007887 A1
- EP 1977850 A1